# EUROPEAN PATENT SPECIFICATION

(11) **EP 0 365 488 B1**
(45) Date of publication and mention of the grant of the patent: **22.12.1993**
(21) Application number: 89830140.3
(22) Date of filing: 31.03.1989
(51) Int. Cl.: A63B 45/00, B29C 39/08

(54) **Process for producing hollow elastic bodies, in particular balls and similar objects, and the balls so produced**
Verfahren zur Herstellung hohler elastischer Körper, insbesondere von Bällen und ähnlichen Objekten sowie auf diese Weise hergestellte Bälle
Procédé de fabrication de corps creux et élastiques en particulier balles et objets semblables, et balles fabriquées de cette manière

(30) Priority: 19.10.1988 IT 362888
(43) Date of publication of application: 25.04.1990
(73) Proprietor: TALE S.r.l., I-47100 Forli (IT)
(72) Inventor: Pacetto, Giovanni, Trento (IT)
(74) Representative: Dall'Olio, Giancarlo

(56) References cited:
- US-A- 3 246 069
- US-A- 4 154 789

## Description

The object of the present invention is to obtain a process for producing hollow elastic bodies, in particular balls and similar objects, as well as a ball so produced.

It is known that balls used in various sports, such as football and similar games, generally comprise a casing made in a resistant material, such as leather, or a synthetic material, and a "bladder" air chamber inflated under pressure, within it. The casing has the purpose of making the ball resistant to wear and ensuring that it keeps its shape, whilst the "bladder", or inner air chamber, serves to give the ball the required qualities of elasticity and bounce. The casing is also fitted with a valve for inflating the "bladder" or inner air chamber.

Balls of this type, mainly for professional use, have a high cost due to the complex production method required, as well as the price of the materials employed.

It is also known that similar balls can be produced using a single layer of synthetic resin, usually a vinyl resin such as PVC (polyvinylchloride). These balls are currently produced using the rotational moulding technique.

More specifically, the process for moulding the ball involves introducting a suitable dose of resin, in liquid form, into a mould comprising two peripherally-joined semi spherical shells.

The mould is then made to rotate using suitable equipment, around two axes located at right angles to one another, inside a heated chamber.

The motion imparted to the mould, combined with the curing of the mixture, causes a uniform layer of the material (comprising a series of superimposed elementary layers) to be formed on the inner surface of the mould itself, whilst, at the same time, the resin is cured as a result of being heated.

Once the thermal treatment has been completed, the cooling and then the opening of the mould is effected. Finally a valve for inflating the ball is inserted in a seat formed during the ball-moulding stage.

The aforementioned technique enables considerable savings to be made in production costs, but can at the same time only involve a compromise between the durability, elasticity and shape-retaining characteristics required.

This is obviously a result of the fact that the ball is made in one material only, which must thus be chosen in order to ensure elasticity after inflation and to possess sufficient wear-resistence.

The US-A-4.154.789 describes a ball made of thermoplastic material has physical properties substantially akin of those of conventional leather balls, and comprises at least two layers of thermoplastic material molten successively in a same mold and adhering completely to each other; the external layer consists of a material selected from the group of polyamids, thermoplastic elastomers, plastisols and polyurethanes, and the internal layer consists of a material selected from the group comprising thermoplastic elastomers, polyurethanes, polyesters and polyester-polyethers.

The ball is manufactured by rotational molding method consisting in casting successively into a mold made of two detachable complementary portions and to which a planetary motion is imparted, thermoplastic materials constituting the ball-forming layers, from the external layer to the innermost layer, the material for forming one of the internal layer being intoduced after opening the mold at a temperature such that the material forming the proceding layer or layers has not melted completely, thus permitting the breaking of said layer or layers at the level of the joint between the two mold portions.

The outer layer of material is in a gel form when the mould is opened, so that the subsequent rotational moulding completely rejoins the two parts of the outer layer, after the mould is again closed.

However, the opening of the mould requires time to stop the apparatus and then to make it to restart, and this in the long run negatively affects the production of articles, both in number and quality.

The object of the present invention is to solve the above problem by developing a process that makes it possible to produce, using the rotational moulding technique, hollow elastic bodies, in particular balls and similar object, that feature different and specific qualitative attributes for the outer layer, and elasticity and shape-retaining characteristics for the inner layer.
A further object of the present invention is to propose a ball produced using a technically simple and technologically advanced solution, which is highly functional and reliable, and satisfies all the intrinsic and extrinsic qualities required for its envisaged use.

The aforementioned objects are achieved by the present invention regarding a process as described in the Claims.

Using the claimed process it is possible to produce a ball the inner of which has the elasticity and shape-retaining characteristics required, whilst the outer layer can have different characteristics, decided upon as necessary in relation to the specific use needs involved.

The outer layer can, for example, be produced in such a way as to resist external climatic factors, scratching and abrasion, in the case of footballs, whilst it should have optimum grip characteristics where balls for basketball and volley-ball are concerned, etc.

The outer layer definitively gives the ball the specific characteristics required by different sports, such as softness to the touch, a firm grip, safety in impact, regular rebound, wear-resistance, whilst the inner layer, which forms the carcase (or load bearing structure) features shape-retaining qualities and resistance to different pressure of inflation and use that are maintained over a long period of time.

The process which is the subject of the invention is, furthermore, technically simple to effect, thus making it possible to manufacture a product with a relatively economical price.

The characteristics of the invention are expounded in greater detail below in the description of a preferred form of effecting the process for producing hollow elastic bodies, in particular balls and similar objects, as well as of the ball so produced, as illustrated in the accompanying tables of drawings, in which:
- Figures 1, 2 and 3 are respectively a diagrammatic vertical cross-section of the said mould in successive stages of the process concerned, for producing the outer layer of the ball;
- Figures 4a and 4b respectively show the said mould in the stage of introducing the said further vinyl-based plastisol, following different methods for carrying out the process which is the subject of the present invention;
- Figures 5, 6 and 7 respectively show the said mould in successive stages of producing the said inner layers of the ball;
- Figure 8, finally, shows a partially cut-away view of the ball which is the subject of the present invention.

With specific reference to these figures, the process laid forth in the invention involves the use of conventional rotational moulding equipment, indicated as a whole by 1 in the drawings. This equipment basically comprises a mould 2 which is fitted so that it is able to turn upon a major axis 3 and a minor axis 4 that are perpendicular to one another. The top of major axis 3, located in a vertical plane, features a support 5, upon which the minor axis 4 is able to turn in a horizontal plane.

The mould 2 is formed of two shells 2a, 2b which feature respective semi-spherical surfaces. The shells 2a, 2b are designed to be joined in order to form a spherical cavity.

Shell 2a is made to form an integral part of the minor axis 4; shell 2b, on the other hand, is joined by a side hinge 6 to shell 2a, enabling the mould to be opened.

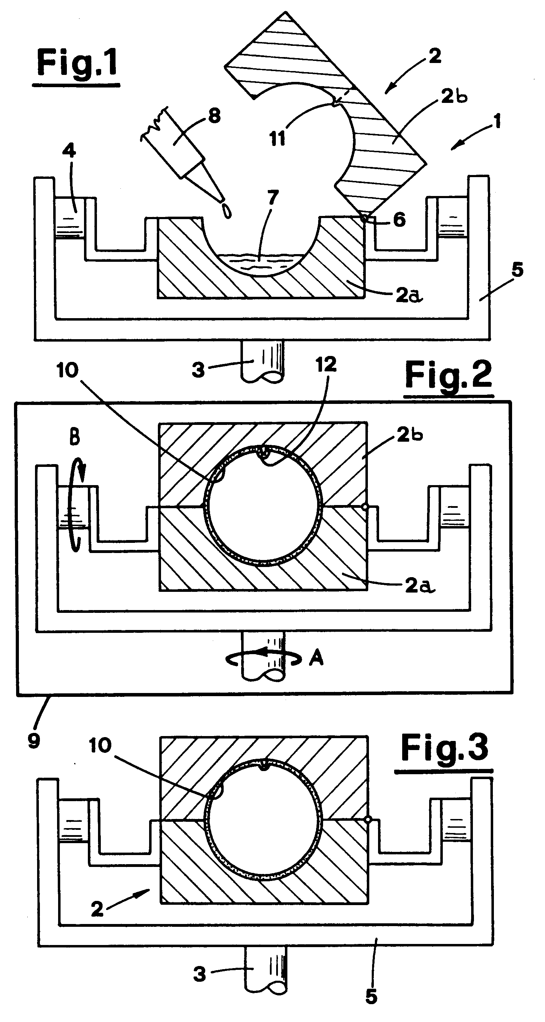

The process that is the subject of the present invention involves first introducing a suitable dose of a vinyl plastisol 7 into the mould 2; the plastisol, in the liquid state, is poured into the open mould using a suitable dosing unit 8 (Figure 1).

This vinyl plastisol is a fine emulsion of the polymer dispersed in a plasticizer, the particles in which do not noticeably dissolve at ordinary temperatures. The polymer employed is a polyvinylchloride (PVC) -type vinyl resin; whilst a dioctyl phthalate (DOP) -type phthalic acid ester is preferably used as plasticizer.

In addition to this, the plastisol also contains suitable additives, such as, in particular, a thermostablising agent, an expanding agent and a colouring dye.

The mould 2 is then closed and subjected to a first biaxial rotational moulding stage inside a heated chamber 9 heated to gelling temperature (e.g. between 80 and 150 C) for a period of 4-20 minutes, depending upon the quantity of material and dimensions of the mould.

This heating causes the material introduced to gel, which is to say to form a solid mass of expanded PVC particles with low mechanical strength characteristics; it should be emphasised that the gelling process in no way leaves traces of curing in any of the elementary layers forming the gelled layer.

The rotation of the mould 2 on axes 3 and 4, as indicated by arrows A and B in figure 2, causes, in known manner, a uniform layer 10 of the material to be distributed over the inner surface of the mould itself. This layer of gelled material will later, as described below, form the outer layer of the ball.

Once the stage in which the gelling of the outer layer 10 has been completed, the mould 2 is cooled to a temperature of approximately 50°C (Figure 3).

It should be noted that during the stage when the outer layer 10 is being formed in the mould, a pin 11 that projects from the inside of shell 2b also forms a seat 12 in which the valve for inflating the ball is later inserted.

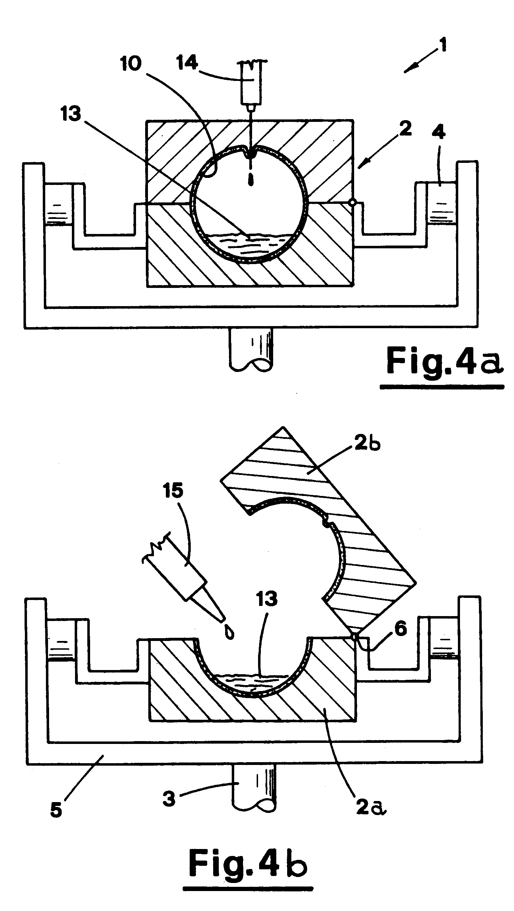

A suitable dose of a further vinyl plastisol 13 is subsequently introduced into the mould 2 (Figure 4a). The plastisol 13 is introduced into the closed mould 2 by means of a special dosing unit 14 using a needle which is designed to be inserted in a hole in shell 2b. The needle dosing unit 14 passes through the gelled layer 10 as required at a point corresponding to the seat 12 in which the inflation valve is to be inserted.

The plastisol 13 is composed in the usual manner of a polyvinylchloride (PVC) -type vinyl resin, or PVC copolymer, either with or without filler or extending agent.

In addition to this one can, according to one's needs, make use of PVC cross-linking agents, which is to say by adding mono, bi or polyfunctional monomers which polymerize at curing temperature, forming polymers that are compatible with the plasticated PVC, such as acrylic monomers, for example.

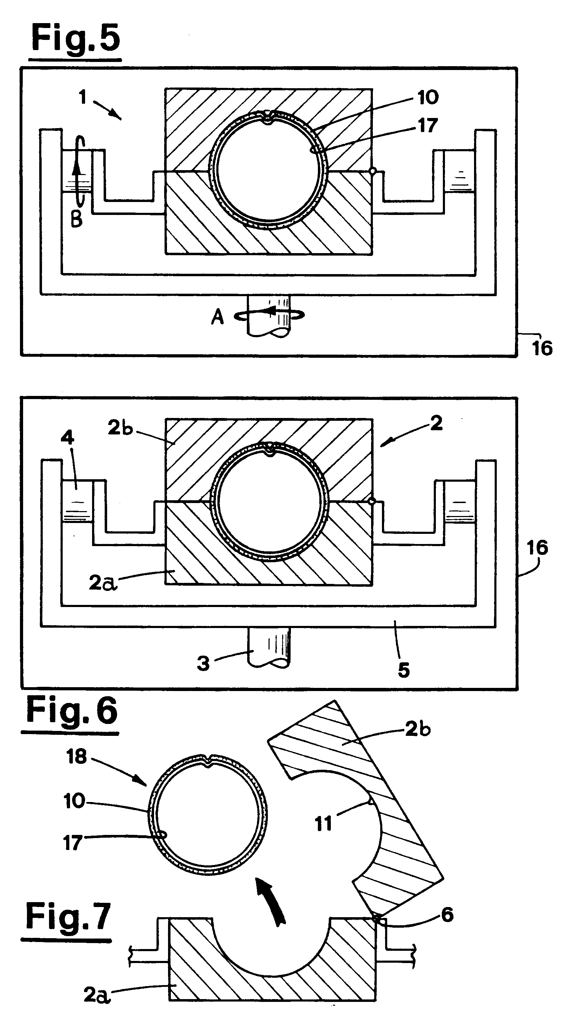

The mould 2 is then subjected to a second biaxial rotational moulding stage inside a heated chamber heated to a curing temperature (e.g.: 170-260°C): see Figure 5. The rotation of the mould 2 upon axes 3 and 4 causes a further layer 17 of material to be uniformly distributed upon the inner surface of layer 10. This layer 17 is designed to amalgamate with the outer layer 10 in order to form the inner layer of the ball.

Heating to curing temperature in fact causes the complete dissolution of the polymer in the plasticizer, and brings about a homogeneous stage. The compatibility of the outer layer 10 and the inner layer 17 ensures that they join together along their common surface, whilst the two layers maintain their individual physical characteristics, retaining their respective properties.

After a sufficient curing time the mould 2 is once again cooled (Figure 6). This enables the optimum physical and mechanical characteristics to be obtained.

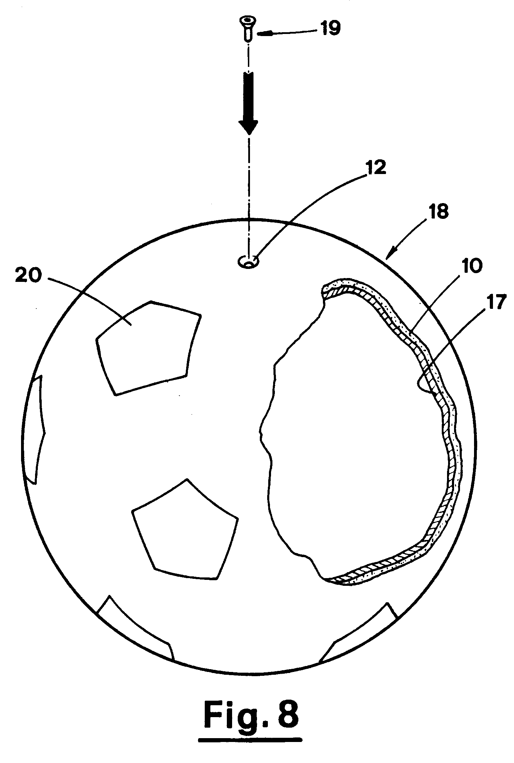

The mould 2 is then opened in order to extract the ball (Figure 7). This ball, shown by 18, and which may be seen in detail in Figure 8, is subsequently fitted with a conventional valve 19, that is inserted in the seat 12 as shown by arrow C. The ball is inflated to a suitable pressure through valve 19.

The surface of the ball can also be given drawings or designs during the moulding stage, such as raised or coloured areas, or the like, as in the case of the areas shown by 20 in the drawing.

The ball 18 thus definitively comprises a double layer of vinyl resin, with different characteristics for the outer and inner layers. In particular, the outer layer 10 is made in flexible expanded PVC, in order to have good surface softness characteristics, whilst the inner layer 17 is produced in flexible cross-linked PVC, able to resist shape changes due to increases in pressure due to, for example, higher temperatures in summer.

## Claims

1. A process for producing hollow elastic bodies, comprising the following stages:
introducing a suitable dose of vinil plastisol (7) into a mould (2), said mould being formed of two joined shells (2a,2b), with one of said shells having a hole made in it;
subjecting said mould (2) to a first biaxial rotational moulding stage inside a heated chamber (9), at a temperature able to provoke the gelling of said dose of plastisol, in order to form an outer layer (10) of a hollow body being produced;
performing a first cooling stage for said mould (2);
inserting a second dose of vinyl plastisol (13) inside the said outer layer (10) of said hollow body;
subjecting said mould (2) to a second biaxial rotational stage inside said heated chamber at a temperature for curing said plastisol in order to form an inner layer (17) of said hollow article being produced;
performing a second cooling stage for said mould (2);
the said process being **characterized in that** said stage in which a second dose of vinyl plastisol (13) is inserted into said outer layer (10) is actuaded by means of a needle (14) which is inserted into said hole to pierce and pass through said outer layer (10), without opening said mould (2).

2. A process as in claim 1, **characterized in that** the plastisol injected prior to the first rotational stage of said mould (2) to form said outer layer, is a fine emulsion of polyvinylchloride dispersed in a phthalic acid ester.

3. A process as in claim 1, **characterized in that** the plastisol injected prior to the first rotational stage of said mould (2) to form said outer layer, contains an expanding agent.

4. A process as in claim 1, **characterized in that** the plastisol injected prior to the second rotational stage of said mould (2) to form said inner layer, is polyvinylchloride with addition of acrylic monomers which polymerize at curing temperature, forming polymers compatible with said polyvinylchloride.

5. A process as in claim 1, **characterized in that** the temperature of said first rotational stage is between 80 degrees C. and 150 degrees C., and is maintained for a time between 4 and 20 minutes.

6. A process as in claim 1, **characterized in that** the temperature of said second rotational stage is between 179 degrees C. and 260 degrees C.

## Patentansprüche

1. Ein Verfahren zur Herstellung von elastischen Hohlkörpern, das die folgenden Stufen umfaßt:
Einspritzen einer ausreichenden Menge Vinyl-Plastisols (7) in eine Form (2), wobei die genannte Form aus zwei verbundenen Formhälften (2a,2b) besteht und eine der beiden Formhälften eine Öffnung aufweist;
die genannte Form (2) einer ersten biaxialen Rotationsstufe zur Formung des Materials in einem Ofen (9) unterziehen; und zwar bei einer Temperatur, die das Gelieren der genannten Menge Plastisols bewirkt, so daß eine äußere Schicht (10) des herzustellenden Hohlkörper gebildet wird;
Durchführung einer ersten Abkühlstufe für die genannte Form (2);
Einspritzen einer zweiten Menge Vinyl-Plastisols (13) innerhalb der genannten äußeren Schicht (10) des genannten Hohlkörpers;
die genannte Form (2) einer zweiten biaxialen Rotationsstufe zur Formung des Materials in dem genannten Ofen unterziehen; und zwar bei einer Temperatur, die das Aushärten des genannten Plastisols bewirkt, so daß eine innere Schicht (17) des genannten Hohlkörpers gebildet wird;
Durchführung einer zweiten Abkühlstufe für die genannte Form (2);
wobei das genannte Verfahren **dadurch gekennzeichnet ist**, **daß** die genannte Stufe, bei der die zweite Menge Vinyl Plastisols (13) in die genannte äußere Schicht (10) des genannten Hohlkörpers mittels einer Nadel (14) eingespritzt wird, die in die genannte Öffnung gesteckt wird und somit die äußere Schicht (10) durchsticht, ohne dabei die genannte Form (2) zu öffnen.

2. Ein Verfahren gemäß Patentanspruch 1, **dadurch gekennzeichnet**, **daß** das vor der ersten Rotationsstufe der genannten Form (2) zum Bilden der äußeren Schicht eingespritzte Plastisol aus einer feinen Emulsion aus Polyvinylchlorid besteht, das in einem Phthalsäuerester aufgelöst wurde.

3. Ein Verfahren gemäß Patentanspruch 1, **dadurch gekennzeichnet**, **daß** das vor der ersten Rotationsstufe der genannten Form (2) zum Bilden der äußeren Schicht eingespritzte Plastisol ein Treibmittel enthält.

4. Ein Verfahren gemäß Patentanspruch 1, **dadurch gekennzeichnet**, **daß** das vor der ersten Rotationsstufe der genannten Form (2) zum Bilden der inneren Schicht eingespritzte Plastisol aus Polyvinylchlorid mit einem Zusatz von Acrylmonomern besteht, die bei der Aushärtetemperatur polymerisieren und mit dem Polyvinylchlorid kompatible Polymere bilden.

5. Ein Verfahren gemäß Patentanspruch 1, **dadurch gekennzeichnet**, **daß** die Temperatur der ersten Rotationsstufe zwischen 80 Grad C. und 150 Grad C. liegt und diese für eine Zeitspanne von zwischen 4 bis 20 Minuten beibehalten wird.

6. Ein Verfahren gemäß Patentanspruch 1, **dadurch gekennzeichnet**, **daß** die Temperatur der zweiten Rotationsstufe zwischen 179 Grad C. und 260 Grad C. liegt.

## Revendications

1. Procédé pour la production de corps élastiques creux comprenant les phases suivantes:
- introduire d'une quantité adéquate de plastisol (7) dans un moule (2), ledit moule étant formé de deux coquilles jointes (2a, 2b) dont l'une est percée;
- soumettre ledit moule (2) à une première phase rotative et biaxiale de moulage à l'intérieur d'une chambre chauffée (9) à une température capable de provoquer la gélatinisation de ladite dose de plastisol, de façon à former une couche externe (10) du corps creux en cours de production;
- soumettre ledit moule (2) à une première phase de refroidissement;
- introduire une deuxième dose de plastisol (13) à l'intérieur de ladite couche externe (10) dudit corps creux;
- soumettre ledit moule (2) à une deuxième phase rotative biaxiale à l'intérieur de ladite chambre chauffée à une température capable de provoquer la formation d'une couche interne (17) dudit corps creux en cours de production;
- soumettre ledit moule (2) à une deuxième phase de refroidissement.
Ledit procédé étant **caractérisé en ce que** ladite phase pendant laquelle la deuxième dose de plastisol (13) est introduite à l'intérieur de ladite couche externe (10), est réalisée par l'intermédiaire d'une aiguille (14) introduite dans ledit trou pour percer et traverser ladite couche externe (10) sans ouvrir ledit moule (2).

2. Procédé selon la revendication 1, **caractérisé en ce** **que** le plastisol, injecté avant la première phase rotative dudit moule (2) pour former ladite couche externe, est une fine émulsion de polychlorure de vinyle dispersé dans un ester d'acide phtalique.

3. Procédé selon la revendication 1, **caractérisé en ce que** le plastisol, injecté avant la première phase rotative dudit moule (2) pour former ladite couche externe, contient un agent soufflant.

4. Procédé selon la revendication 1, **caractérisé en ce que** le plastisol, injecté avant la deuxième phase rotative dudit moule (2) pour former ladite couche interne, est un polychlorure de vinyle additionné de monomères acryliques qui polymérisent à la température du traitement en formant des polymères compatibles avec ledit polychlorure de vinyle.

5. Procédé selon la revendication 1, **caractérisé en ce que** la température de ladite première phase rotative est comprise entre 80 degrés C et 150 degrés C, et qu'elle est maintenue telle pendant une durée allant de 4 à 20 minutes.

6. Procédé selon la revendication 1, **caractérisé en ce que** la température de ladite deuxième phase rotative est comprise entre 179 degrés C et 260 degrés C.
